# EUROPÄISCHE PATENTSCHRIFT

(11) **EP 2 877 360 B1**
(45) Veröffentlichungstag und Bekanntmachung des Hinweises auf die Patenterteilung: **29.03.2017**
(21) Anmeldenummer: 13750263.9
(22) Anmeldetag: 25.07.2013
(51) Int. Cl.: B60K 28/06, B62D 15/02, B60W 40/08

(54) **VERFAHREN UND FAHRERASSISTENZSYSTEM ZUM BETREIBEN EINES FAHRZEUGS BEI EINER GESUNDHEITLICHEN STÖRUNG EINES FAHRERS**
METHOD AND DRIVER ASSISTANCE SYSTEM FOR OPERATING A VEHICLE WHEN A DRIVER'S HEALTH IS IMPAIRED
PROCÉDÉ ET SYSTÈME D'ASSISTANCE DU CONDUCTEUR POUR OPÉRER UN VÉHICULE QUAND LE CONDUCTEUR EST INDISPOSÉ

(30) Priorität: 25.07.2012 DE 102012014717
(43) Veröffentlichungstag der Anmeldung: 03.06.2015
(73) Patentinhaber: Audi AG, 85045 Ingolstadt (DE)
(72) Erfinder: STADLER, Michael, 85110 Arnsberg (DE)
(74) Vertreter: Thielmann, Frank
(86) Internationale Anmeldenummer: PCT/EP2013/002213
(87) Internationale Veröffentlichungsnummer: WO 2014/015990

(56) Entgegenhaltungen:
- EP-A1- 2 314 489
- WO-A1-2013/023738
- DE-A1- 10 126 224
- DE-A1-102011 015 130
- DE-A1-102011 089 938
- US-A1- 2004 044 293
- US-B1- 7 667 609
- US-B1- 8 044 772

## Beschreibung

Die vorliegende Erfindung betrifft ein Verfahren gemäß dem Oberbegriff von Anspruch 1 zum Betreiben eines Fahrzeugs bei einer gesundheitlichen Störung eines Fahrers.

Wie allgemein bekannt ist, ist der Betrieb von (Kraft)Fahrzeugen mit Gefahren verbunden. Insbesondere besteht die Gefahr einer Kollision eines Fahrzeugs mit einem anderen Verkehrsteilnehmer oder einem Hindernis. Die Wahrscheinlichkeit für eine Kollision (Unfall) steigt dabei mit dem Grad der Ablenkung eines Fahrers vom eigentlichen Verkehrsgeschehen. Eine Ablenkung vom Verkehrsgeschehen kann beispielsweise verursacht sein durch ein Gespräch mit einem Beifahrer, ein Telefonat, eine akustische Beschallung durch ein Audiogerät, eine Betrachtung der Fahrzeugumgebung abseits des Straßenverlaufs, Müdigkeit, etc.

Vor diesem Hintergrund beschreibt die DE 43 38 244 C2 ein Gefahrenabwendungssystem für ein Fahrzeug mit einer Fahrzeugzustands-Überwachungseinrichtung, einer Fahrtumgebungs-Überwachungseinrichtung, einer Fahrer-Überwachungseinrichtung und einer Gefahrenabwendungs-Einrichtung. Das Gefahrenabwendungssystem weist eine Fahrt-Bewertungseinrichtung zur Bestimmung einer Gefahrensituation für das Fahrzeug auf, die so beschaffen ist, dass ihr von einer Fahrzeugzustands-Überwachungseinrichtung Daten über den Bewertungs- und Betriebszustand des Fahrzeugs und von einer Fahrtumgebungs-Überwachungseinrichtung Daten über die Umgebung zugeführt werden, und die Fahrt-Bewertungseinrichtung auf der Grundlage der von der Fahrzeugzustands-Überwachungseinrichtung und der Fahrtumgebungs-Überwachungseinrichtung zugeführten Daten das Gefahrenpotenzial bewertet und dann ein Steuersignal abgibt, wenn das Fahrzeug sich in einer Gefahrensituation befindet. Weiter ist eine Gefahrenabwendungs-Steuereinrichtung zur Feststellung einer Gefahrenwahrnehmung des Fahrers vorgesehen, (a) die von der Fahrt-Bewertungseinrichtung gesteuert wird und nur dann aktiviert wird, wenn die Fahrt-Bewertungseinrichtung feststellt, dass das Fahrzeug sich in einer Gefahrensituation befindet, (b) der einerseits von der Fahrtumgebungs-Überwachungseinrichtung Daten über die Umgebung und andererseits von der Fahrer-Überwachungseinrichtung Daten betreffend den Zustand und das Verhalten des Fahrers zugeführt werden, und (c) die ein Steuersignal nur dann abgibt, wenn die Gefahrenabwendungs-Steuereinrichtung anhand der zugeführten Daten feststellt, dass der Fahrer die Gefahrensituation nicht wahrnimmt, wobei das Steuersignal der Gefahrenabwendungs-Steuereinrichtung zugeführt wird, um einen Gefahrenabwendungs-Vorgang durchzuführen.

Die DE 195 45 848 A1 beschreibt eine Sicherheitsvorrichtung für Personen, insbesondere für Lenker von Fahrzeugen, wie Kraftfahrzeugen, wobei das Nachlassen der Konzentration, insbesondere das Einschlafen der Personen durch Messen physiologischer Parameter an ihren Körperteilen überwacht wird und die Messwerte zum Steuern einer Anzeige- oder Signalvorrichtung verwendet werden. Die Sicherheitsvorrichtung weist ein Lenkelement mit Sensormitteln auf, durch welche die das Lenkelement des Fahrzeugs drehenden Hände zur Erfassung der physiologischen und/oder psychischen Parameter und der signifikanten Emotionen abtastbar sind. Die Sensormittel stehen mit einer Steuervorrichtung in Verbindung.

Und aus der DE 198 22 676 A1 ist ein elektronisches Auge bekannt, das den Fahrer vor Übermüdung und dem Einschlafen am Lenkrad warnt. Das elektronische Auge misst die Augen und den Puls des Fahrers während der Fahrt und warnt ihn vor dieser Gefahr. Beachtet der Fahrer die Warnsignale nicht, bleibt sein Fahrzeug für mehrere Stunden stehen und fährt nicht mehr weiter, solange, bis für ausreichende Pause gesorgt ist und der Fahrer weder für sich noch für andere eine Gefahr darstellt. Diese Prozedur wiederholt sich bei jeder Fahrt.

Neben den oben erwähnten Gründen für eine Ablenkung eines Fahrers vom Verkehrsgeschehen sind auch gesundheitliche Probleme eines Fahrers oftmals zumindest mitursächlich für das Entstehen von Unfällen. Vor diesem Hintergrund sind Verfahren und Vorrichtungen entwickelt worden, mit denen der gesundheitliche Zustand eines Fahrers überwacht und gegebenenfalls ein Warnsignal ausgegeben und/oder das Fahrzeug gestoppt werden kann.

So ist beispielsweise aus der DE 101 26 224 A1 ein Verfahren und eine Einrichtung für dessen Durchführung bekannt, bei dem ein Fahrerzustandsmonitor physiologische Zustandsgrößen des Fahrers ermittelt. In Abhängigkeit vom ermittelten Ergebnis wird auf Steuerungseinheiten des Kraftfahrzeugs sowie den Fahrer eingewirkt, um geeignete Maßnahmen zur Einhaltung eines sicheren Zustands des Fahrers bzw. des Kraftfahrzeugs durchzuführen.

Die US 7 667 609 B1 beschreibt Verfahren und Systeme mit einem oder mehreren Expertensystemen zum Überwachen von Betreibern von Vorrichtungen in Bezug auf Beeinträchtigungen, wie bspw. chemische Beeinträchtigung, körperliche Beeinträchtigung, gesundheitliche Beeinträchtigung oder emotionale Beeinträchtigung. Die Betreiber der Vorrichtungen werden selektiv getestet, um die Betreiber der Vorrichtungen zu retten und die Vorrichtungen zu steuern (bspw. PKW, LKW, industrielle Transporter, öffentliche Verkehrsmittel, wie Busse, U-Bahnen, Züge, Flugzeuge, Schiffe, Wasserfahrzeuge, Sportfahrzeuge und gefährliche oder potenziell gefährlichen Maschinen im Allgemeinen), wenn eine Beeinträchtigung des Betreibers der Vorrichtung festgestellt wird. Es kann die Vorrichtung in einen vorbestimmten Zustand versetzt werden oder zu einer vorbestimmten Stelle (bspw. für eine medizinische Behandlung, erhöhte Sicherheit, Bergung, etc.) zurückkehren, wobei die Vorrichtung autonom bewegt wird (bspw. unter Verwendung von Gyroskopen, GPS-Signalen, Funksignalen, optischen Signalen und/oder drahtgebundenen Signalen).

Ähnliche Verfahren und Systeme sind auch Gegenstand der US 8 044 772 B1 (Continuation-in-part von US 7 667 609 B1).

Es ist Aufgabe der vorliegenden Erfindung, ein gegenüber diesem Stand der Technik verbessertes Verfahren zum Betreiben eines Fahrzeugs zur Verfügung zu stellen. Diese Aufgabe wird gelöst durch das Verfahren gemäß Anspruch 1. Vorteilhafte Weiterbildungen der Erfindung sind Gegenstand der Unteransprüche.

Erfindungsgemäß wird ein Verfahren zum Betreiben eines (Kraft)Fahrzeugs vorgeschlagen, bei dem während des Betriebs des Fahrzeugs eine Überwachung des Zustands eines Fahrers unter Erfassung und Auswertung von wenigstens einer physiologischen Zustandsgröße und/oder Verhaltensweise durchgeführt wird und in Abhängigkeit von dem Ergebnis einer Auswertung der wenigstens einen physiologischen Zustandsgröße und/oder Verhaltensweise eine geeignete Maßnahme zur Einhaltung eines sicheren Zustands des Fahrers und/oder des Fahrzeugs durchgeführt wird. Für den Fall, dass aufgrund der wenigstens einen erfassten und ausgewerteten physiologischen Zustandsgröße und/oder Verhaltensweise des Fahrers mit einem vorgebbaren Grad an Wahrscheinlichkeit davon auszugehen ist, dass der Fahrer das Fahrzeug nicht mehr sicher zu führen vermag, wird mittels hierfür vorgesehener Sensor- und Steuerungseinrichtungen eine autonome Steuerung des Fahrzeugs zu einer Klinik oder einer anderen Hilfseinrichtung durchgeführt, und werden während der autonomen Steuerung des Fahrzeugs von einer Sendeeinrichtung des Fahrzeugs mittels Funk Daten an die Klinik oder die andere Hilfseinrichtung übertragen.

Das erfindungsgemäße Verfahren ist dadurch gekennzeichnet, dass von einer Empfangseinrichtung des Fahrzeugs mittels Funk Daten von der Klinik oder der anderen Hilfseinrichtung empfangen werden, die zumindest einen Steuerbefehl für eine Lenkrad- und/oder Sitzverstellung enthalten.

Das erfindungsgemäße Verfahren zeichnet sich dadurch aus, dass in einer Situation, bei der davon auszugehen ist, dass ein Fahrer aufgrund einer im weitesten Sinne zu verstehenden gesundheitlichen (physischen und/oder psychischen) Störung nicht mehr in der Lage ist, sein Fahrzeug (sicher) zu führen, in einen Zustand einer autonomen Steuerung des Fahrzeugs übergegangen wird. Hierdurch wird - anders als beispielsweise bei einem reinen Stoppen eines Fahrzeugs - ein sicheres (Weiter)Bewegen des Fahrzeugs ermöglicht, beispielsweise bis eine sowohl für den betroffenen Fahrer und sein Fahrzeug als auch für andere Verkehrsteilnehmer sichere (Verkehrs)Situation erreicht ist.

Die autonome Steuerung des Fahrzeugs umfasst ein autonomes Fahren des Fahrzeugs zu einer Klinik oder einer anderen Hilfseinrichtung.

Hierdurch kann so lange ein autonomes Steuern eines Fahrzeugs durchgeführt werden, bis beispielsweise das Fahrzeug eine (medizinische) Hilfseinrichtung erreicht hat. Auch wenn das Fahrzeug nur in Richtung einer Klinik oder einer anderen Hilfseinrichtung gesteuert wird, kann - wie nachfolgend anhand eines Beispiels erläutert wird - in vorteilhafter Weise oftmals die Zeitdauer vom Eintreten der gesundheitlichen Störung bis zur ersten medizinischen Hilfeleistung entscheidend verkürzt werden.

Während der autonomen Steuerung des Fahrzeugs werden von einer Sendeeinrichtung des Fahrzeugs mittels Funk Daten an eine Klinik oder eine andere Hilfseinrichtung übertragen.

Hierdurch ergibt sich der Vorteil, dass bei einer gesundheitlichen Störung bei einem Fahrer eine Klinik oder andere (medizinische) Hilfseinrichtung zeitnah über das Vorliegen die Störung informiert wird. Weiter können die Daten beispielsweise Informationen über die zumindest eine erfasste und ausgewertete physiologische Zustandsgröße und/oder Verhaltensweise, die Position des Fahrzeugs, die vom Fahrzeug aktuell autonom angesteuerte Klinik oder andere Hilfseinrichtung, etc. enthalten. Auch können mit Hilfe der Datenübermittlung beispielsweise kontinuierlich oder in vorgebbaren Zeitabständen Informationen über den aktuellen Zustand des Fahrers (mittels der aktuell ermittelten Zustandsgröße(n) und/oder Verhaltensweise(n)) an die Klinik oder andere Hilfseinrichtung übertragen werden. Hierdurch können beispielsweise in der Klinik oder der Hilfseinrichtung frühzeitig entsprechende Vorbereitungen für eine mögliche medizinische Behandlung des Fahrers getroffen werden.

Erfindungsgemäß ist vorgesehen, dass von einer Empfangseinrichtung des Fahrzeugs mittels Funk Daten von der Klinik oder der anderen Hilfseinrichtung empfangen werden. Diese Daten können beispielsweise eine Information über eine anzufahrende Position enthalten. Insbesondere enthalten diese Daten zumindest einen Steuerbefehl für eine Lenkrad- und/oder Sitzverstellung. Mittels der empfangenen Daten kann so noch während der autonomen Steuerung des Fahrzeugs erreicht werden, dass beispielsweise der Fahrersitz in eine Liegeposition verstellt und/oder das Lenkrad in Richtung des Armaturenbretts verstellt oder in das Armaturenbrett versenkt wird. Hierdurch kann beispielsweise während der autonomen Steuerung eine für den Fahrer förderliche Sitz- bzw. Liegeposition und bei Eintreffen von Hilfspersonal ein erleichterter Zugang zum Fahrer für eine erste Behandlung geschaffen werden.

Bei dieser Ausgestaltung des erfindungsgemäßen Verfahrens ergibt sich in vorteilhafter Weise weiter die Möglichkeit, dass beispielsweise an das autonom gesteuerte Fahrzeug eine Information gesandt wird, welche Einfahrt einer anzufahrenden Klinik angesteuert werden soll. Oder es kann an das Fahrzeug eine Information dahin übermittelt werden, welche naheliegende/geeignete/aufnahmebereite Klinik oder Hilfseinrichtung angesteuert werden soll. Hierdurch kann beispielsweise vermieden werden, dass das Fahrzeug eine nächtsgelegene Hilfseinrichtung autonom ansteuert, in dieser dem Fahrer aber nicht oder nicht in optimaler Weise geholfen werden kann. Mittels dieser Ausgestaltung des erfindungsgemäßen Verfahrens kann somit - allgemein ausgedrückt - eine anfänglich fahrzeugintern vorgenommene autonome Steuerung des Fahrzeugs zu verändern.

Weiter ist es von Vorteil, wenn, wie dies gemäß noch einer weiteren vorteilhaften Weiterbildung der Erfindung vorgesehen ist, als physiologische Zustandsgröße und/oder Verhaltensweise des Fahrers zumindest eine von dessen Herzfrequenz, Herzfrequenzvariabilität, Hauttemperatur, Leitfähigkeit der Haut, Augenlidfrequenz, Blickrichtung, Blickrichtungswechsel, Kopfhaltung, und/oder Griffkraft des Fahrers am Lenkrad erfasst und ausgewertet wird.

Mit diesen physiologischen Zustandsgrößen und/oder Verhaltensweisen können eine große Anzahl an gesundheitlichen Störungen erkannt werden. Gleichzeitig ist zur Erfassung der entsprechenden physiologischen Zustandsgrößen und/oder Verhaltensweisen nur eine vergleichsweise einfache und/oder einfach zu bedienende Sensorik erforderlich.

Gemäß noch einer weiteren vorteilhaften Weiterbildung der Erfindung ist vorgesehen, dass dem Fahrer der Übergang zu einer autonomen Steuerung des Fahrzeugs und/oder die autonome Steuerung signalisiert wird und der Fahrer den Übergang zu einer autonomen Steuerung, die autonome Steuerung und/oder die hierbei durchgeführten Maßnahmen zumindest teilweise beenden und/oder abändern kann.

Hierdurch ergibt sich in vorteilhafter Weise eine Eingriffsmöglichkeit für den Fahrer, beispielsweise in einem Fall, bei dem er (noch) in der Lage ist, das Fahrzeug sicher zu führen, die Auswertung der zumindest einen erfassten physiologischen Zustandsgröße und/oder Verhaltensweise des Fahrers aber ein hiervon abweichendes Ergebnis ergeben hat.

Die vorliegende Anmeldung beschreibt auch ein Fahrerassistenzsystem mit einer Erfassungseinrichtung, mit der der Zustand eines Fahrers durch Erfassung von wenigstens einer physiologischen Zustandsgröße und/oder Verhaltensweise erfasst werden kann, mit einer Auswertungseinrichtung, mit der die wenigstens eine erfasste physiologische Zustandsgröße und/oder Verhaltensweise ausgewertet werden kann. Das Fahrerassistenzsystem ist dadurch gekennzeichnet, dass eine mit der Auswertungseinrichtung in kommunikativer Verbindung stehende Steuereinrichtung vorgesehen ist, mit Hilfe derer für den Fall, dass aufgrund der wenigstens einen erfassten und ausgewerteten physiologischen Zustandsgröße und/oder Verhaltensweise des Fahrers mit einem vorgebbaren Grad an Wahrscheinlichkeit davon auszugehen ist, dass der Fahrer das Fahrzeug nicht mehr sicher zu führen vermag, eine autonome Steuerung des Fahrzeugs durchgeführt werden kann.

Die Steuereinrichtung des Fahrerassistenzsystems kann eine satellitengestützte Positionsbestimmungseinrichtung, ein satellitengestütztes Navigationssystem, sowie Sensormittel zur Erfassung und Auswertung einer Umgebung des Fahrzeugs aufweisen oder es kann zu diesen Einrichtungen eine kommunikative Verbindung bestehen.

Weiter ist es von Vorteil, wenn das Fahrerassistenzsystem weiter eine Sende- und Empfangseinrichtung umfasst oder eine Verbindungseinrichtung zu diesen Einrichtungen aufweist, wobei mittels der Sende- und Empfangseinrichtung über Funk Daten an eine Klinik oder eine andere Hilfseinrichtung übertragen und Daten von einer Klinik oder einer anderen Hilfseinrichtung empfangen werden können.

Ebenso ist es vorteilhaft, wenn das Fahrerassistenzsystem als Sensoreinrichtung zur Erfassung von wenigstens einer physiologischen Zustandsgröße und/oder Verhaltensweise des Fahrers eine Frequenzmesseinrichtung zur Erfassung der Herzfrequenz und/oder Herzfrequenzvariabilität, eine Kameraeinrichtung zur Erfassung der Augenlidfrequenz, der Blickrichtung, des Blickrichtungswechsels und/oder der Kopfhaltung, und/oder eine Druckmesseinrichtung zum Erfassen einer Griffkraft des Fahrers am Lenkrad aufweist.

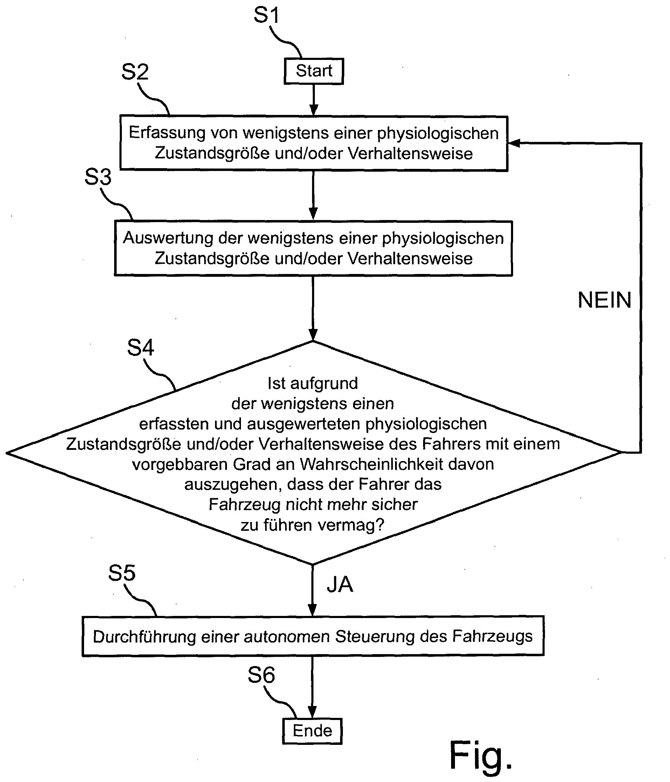

Die vorliegende Erfindung wird anhand der beigefügten Zeichnung näher erläutert.

Die Figur zeigt ein Ablaufdiagramm eines Teils des erfindungsgemäßen Verfahrens. Die Darstellungen in der Figur sind rein schematisch.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Wie in der Figur gezeigt ist, wird bei dem erfindungsgemäßen Verfahren zum Betreiben eines Fahrzeugs, während des Betriebs des Fahrzeugs - Schritt S1 - eine Überwachung des Zustands eines Fahrers unter Erfassung - Schritt S2 - und Auswertung - Schritt S3 - von wenigstens einer physiologischen Zustandsgröße und/oder Verhaltensweise durchgeführt.

Der Begriff "während des Betriebs" ist vorliegend sehr weit zu verstehen und umfasst nicht nur einen Fahrzeugzustand, bei dem das Fahrzeug eine Geschwindigkeit von > 0 km/h aufweist, sondern auch einen Fahrzeugzustand, bei dem bei einem stehenden Fahrzeug ein Fahrer sich am Fahrerplatz (Fahrersitz) befindet. Auch wenn innerhalb der vorliegenden Anmeldung die Erfindung vorwiegend in Bezug auf das Betreiben eines (Kraft)Fahrzeugs beschrieben wird, ist es für einen Fachmann jedoch unmittelbar erkennbar, dass das erfindungsgemäße Verfahren sowie das nachfolgend beschriebene Fahrerassistenzsystem auch für den Betrieb von anderen Fahrzeugen und/oder Verkehrsmitteln geeignet ist.

Das Erfassen und Überwachen eines Zustands eines Fahrers kann mit jeder geeigneten Einrichtung/Vorrichtung oder einer Kombination von mehreren Einrichtungen/Vorrichtungen durchgeführt werden. Aus dem Stand der Technik sind eine große Anzahl und Vielfalt an Erfassungsmitteln (Sensormitteln) bekannt, mit denen beispielsweise eine Herzfrequenz, Herzfrequenzvariabilität, Hauttemperatur, Leitfähigkeit der Haut, oder die Griffkraft des Fahrers am Lenkrad erfasst werden kann. In einem einfach zu handhabenden Fall kann beispielsweise eine Erfassungseinrichtung geeignete Sensormittel (z.B. Elektroden) in oder auf einem Sicherheitsgurt aufweisen, mit denen die Herzfrequenz erfasst werden kann. Oder es können geeignete Sensormittel in/auf/unter der Oberfläche einer Lenkhandhabe (Lenkrad) angeordnet sein, mit denen beispielsweise die Herzfrequenz, Herzfrequenzvariabilität, Hauttemperatur, Leitfähigkeit der Haut, und/oder die Griffkraft des Fahrers am Lenkrad erfasst werden kann.

Und eine Einrichtung zur Erfassung von Augenlidfrequenz, Blickrichtung, Blickrichtungswechsel, Kopfhaltung kann im (Kraft)Fahrzeug als Sensormittel ein Kameramittel aufweisen, das den Bereich des Fahrzeugs erfassen kann, an dem sich ein Fahrer während des Betriebs des Fahrzeugs üblicherweise aufhält (Fahrersitz).

Die oben erwähnten physiologischen Zustandsgrößen und/oder Verhaltensweisen sind nicht abschließend zu verstehen. Selbstverständlich können beliebige andere/weitere physiologische Zustandsgrößen und/oder Verhaltensweisen beim erfindungsgemäßen Verfahren und dem erfindungsgemäßen Fahrerassistenzsystem erfasst und ausgewertet werden. Dies kann beispielsweise insbesondere dann sinnvoll sein, wenn bei einem Fahrer eine bestimmte Vorerkrankung/Disposition vorliegt (z.B. Diabetes, Hypertonie, Hypotonie, Myokardinfarkt), die die Erfassung anderer/weiterer physiologischer Zustandsgrößen und/oder Verhaltensweisen sinnvoll und/oder vorteilhaft erscheinen lassen.

So ist es beispielsweise denkbar, alternativ oder zusätzlich zu den oben erwähnten physiologischen Zustandsgrößen und/oder Verhaltensweisen die Gehirnsströme, den Blutdruck, und/oder die Bewegung des Fahrers auf dem Fahrersitz, etc. zu erfassen.

Zur Erfassung der physiologischen Zustandsgrößen kann es gegebenenfalls erforderlich sein, dass der Fahrer hierfür erforderliche Sensormittel anlegt (beispielsweise eine sog. Blutdruckmanschette, Elektrodengurt). Des Weiteren muss eine Kommunikationsverbindung (z.B. drahtlos oder drahtgebunden) von der Erfassungseinrichtung zu einer entsprechenden Auswertungseinrichtung gegeben/herstellbar sein, mittels derer die Daten der Erfassungseinrichtung zur Auswertungseinrichtung übertragbar sind.

Die Erfassungseinrichtung kann selbst einen flüchtigen und/oder nichtflüchtigen Speicher aufweisen, in dem die von dem/den Sensormittel(n) kontinuierlich oder diskontinuierlich erfassten Daten (zwischen)gespeichert werden können. Eine Erfassungseinrichtung kann beispielsweise auch einen Analog/Digital-Wandler aufweisen, um vom/von Sensormittel(n) erfasste analoge Signale in digitale Signale wandeln zu können.

Die von der/den Erfassungseinrichtung(en) bezüglich der wenigstens einen physiologischen Zustandsgröße und/oder Verhaltensweise ermittelten Daten werden zu einer Auswertungseinrichtung übertragen. Dies kann auf jede geeignete Weise erfolgen, beispielsweise drahtlos mittels Funk oder drahtgebunden, kontinuierlich oder diskontinuierlich. Die Auswertung der von der/den Erfassungseinrichtung(en) übertragenen Daten erfolgt durch eine hierfür geeignete Auswertungseinrichtung, beispielsweise einer digitalen Recheneinrichtung, auf der ein geeigneter Programmcode installiert und ablauffähig ist. Ein solcher Programmcode kann beispielsweise im Falle eines Kameramittels eine Bildauswertung umfassen, und im Falle der Ermittlung von Blutdruck- und/oder Pulsdaten eine Bewertung der ermittelten Daten.

Durch die Auswertungseinrichtung (Bewertungseinrichtung) können die übertragenen Daten beispielsweise mit "Normdaten" verglichen werden, d.h. mit Daten, wie sie im Bereich eines "gesunden" Zustands auftreten oder auch mit für einen individuellen Fahrer gespeicherten Daten. Die letztere Option kann beispielsweise bei einem Fahrer sinnvoll sein, bei dem aufgrund einer (Vor)Erkrankung/Disposition trotz eines fahrtüchtigen Zustands physiologische Zustandsdaten und/oder Verhaltensweisen erfasst werden, die deutlich von der Norm abweichen und somit zu einer Fehlinterpretation der erfassten Daten führen könnte.

Sollen Daten für einen individuellen Fahrer verwendet werden, so können diese entweder in der Auswertungseinrichtung fest hinterlegt werden, oder sie können beispielsweise von einem Chip/einer Chipkarte (z.B. unter Verwendung von RFID-Technik oder einer Leseeinrichtung), den/die der Fahrer bei sich trägt, beim Einsteigen des Fahrers in die Auswertungseinrichtung übertragen werden. Hierdurch kann das erfindungsgemäße Verfahren in individualisierter Weise für Fahrzeuge verwendet werden, bei denen oftmals ein Fahrerwechsel gegeben ist (z.B. Mietfahrzeuge, Car-Sharing-Fahrzeuge).

Wird durch die Auswertungseinrichtung aufgrund der wenigstens einen erfassten und ausgewerteten physiologischen Zustandsgröße und/oder Verhaltensweise des Fahrers festgestellt, dass mit einem vorgebbaren Grad an Wahrscheinlichkeit davon auszugehen ist, dass der Fahrer das Fahrzeug nicht mehr sicher zu führen vermag - Schritt S4 -, wird mittels hierfür vorgesehener Sensor- und Steuerungseinrichtungen eine autonome Steuerung des Fahrzeugs durchgeführt - Schritt S5. Sofern und sobald es nicht mehr erforderlich ist, wird das Verfahren beendet - Schritt S7.

Ein Zustand, bei dem davon auszugehen ist, dass ein Fahrer nicht mehr in der Lage ist, sein Fahrzeug sicher zu führen, kann beispielsweise dann festgestellt werden, wenn der Puls des Fahrers auf Null sinkt (Herzstillstand) oder erhebliche Herzrhythmusstörungen (Myokardinfarkt) festgestellt werden. Auch kann ein längeres Schließen der Augen (Augenlidfrequenz) in Kombination mit einem Absinken des Kopfes (Kopfhaltung) als Anzeichen einer Synkope (Kreislaufkollaps) oder einer Bewusstlosigkeit/Bewusstseinsstörung (z.B. aufgrund eines Apoplex/Insult) interpretiert werden. Oder es kann aufgrund eines Abweichens der Blickrichtung von der Fahrtrichtung in Kombination mit einem Krampfzustand, der mit entsprechenden Muskelzuckungen verbunden ist, auf das Vorliegen eines epileptischen Anfalls geschlossen werden.

In der Auswertungseinrichtung können Schwellenwerte für verschiedenen beobachtete physiologische Zustandsgrößen und/oder Verhaltensweisen oder Kombinationen von physiologischen Zustandsgrößen und/oder Verhaltensweisen gespeichert/vorhanden sein, ab deren Über- oder Unterschreiten davon auszugehen ist, dass der Fahrer nicht mehr in der Lage ist, sein Fahrzeug sicher zu führen. Auch kann hierfür - gegebenenfalls in Abhängigkeit von der Geschwindigkeit des Fahrzeugs und der aktuellen Verkehrssituation - eine gewisse Mindestzeitdauer vorgebbar sein, über die die beobachtete(n) physiologische(n) Zustandsgröße(n) und/oder Verhaltensweise(n) andauern muss/müssen.

Ist ein Zustand durch die Auswertungseinrichtung erkannt worden, bei der davon auszugehen ist, dass ein Fahrer sein Fahrzeug nicht mehr sicher zu lenken vermag, wird gemäß der vorliegenden Erfindung mittels hierfür vorgesehener Sensor- und Steuerungseinrichtungen automatisch eine autonome Steuerung des Fahrzeugs - Schritt S5 - durchgeführt. Hierunter ist zu verstehen, das durch die hierfür vorgesehenen und geeigneten Sensor- und Steuerungseinrichtungen das Fahrzeug zumindest so lange autonom gesteuert wird, bis sowohl für den Fahrer und sein Fahrzeug als auch für anderer Verkehrsteilnehmer ein sicherer Zustand erreicht ist.

Die autonome Steuerung des Fahrzeugs kann ein nicht von der vorliegenden Erfindung umfasstes Fahren des Fahrzeugs zu einem Seitenstreifen einer Fahrbahn oder einem Parkplatz umfassen. Hierbei kann mit Hilfe der für die autonome Steuerung vorgesehenen und geeigneten Sensor- und Steuerungseinrichtungen beispielsweise ein für ein Anhalten des Fahrzeugs geeigneter Seitenstreifen erkannt werden und dort das Fahrzeug abgestellt werden. Auch kann die autonome Steuerung dazu verwendet werden, das Fahrzeug autonom in eine vorhandene Parklücke einzuparken.

Wenn das Fahrzeug entsprechend ausgerüstet ist, beispielsweise mit einer (satellitengestützten) Positionsbestimmungseinrichtung und einem (satellitengestützten) Navigationssystem kann durch eine autonome Steuerung beispielsweise auch ein geeigneter Parkplatz, eine Klinik oder eine andere Hilfseinrichtung ausgewählt und das Fahrzeug in die entsprechende Richtung bewegt werden.

Hierbei ist es vorteilhaft, wenn das Fahrzeug über eine geeignete Sende- und Empfangseinrichtung verfügt, mit Hilfe derer vom Fahrzeug aus mittels Funk Daten an eine Klinik oder eine andere Hilfseinrichtung übertragen werden können. Ein solcher "Notruf" kann beispielsweise die Position des Fahrzeugs, die derzeitige Richtung (Straße) der derzeitigen Fortbewegung und gegebenenfalls das angestrebte Ziel, sowie weitere Daten umfassen (beispielsweise eine Patientenkennung, aktuelle/gespeicherte, ermittelte/ausgewertete Daten bezüglich des Zustands des Fahrers, etc.). Diese Daten können gegebenenfalls auch an einen vom Fahrer vorher bestimmten Arzt übermittelt werden, bzw. es können die übermittelten Daten Informationen über den vom Fahrer vorher bestimmten Arzt enthalten. Hierdurch kann dieser Arzt gegebenenfalls in die vorzunehmenden Hilfsmaßnahmen einbezogen werden.

Sollte die von der autonomen Steuerung ausgewählte Klinik oder andere (medizinische) Hilfseinrichtung beispielsweise nicht die optimale Wahl darstellen, weil bei der angesteuerten Klinik beispielsweise akute Kapazitätsprobleme gegeben sind oder aufgrund des vermuteten Zustands des Fahrers in einer anderen Klinik oder Hilfseinrichtung eine bessere Behandlung des Fahrers möglich ist, können von der Klinik oder der anderen Hilfseinrichtung Daten zu dem Fahrzeug übertragen werden, wobei die Daten eine Information über eine neue anzufahrende Position enthalten. Das Fahrzeug kann dann autonom in Richtung der neu anzufahrenden Position gesteuert werden.

Diese neue anzufahrende Position kann auch eine sich dynamisch verändernde Position sein, beispielsweise die Position eines Kranken- oder Notarztwagens, der sich gegebenenfalls bereits in Richtung des autonom gesteuerten Fahrzeugs bewegt. Auf diese Weise kann beispielsweise die Zeitdauer, die bis zu einer ersten medizinischen/ärztlichen Hilfeleistung vergeht, in vorteilhafter Weise verkürzt werden.

Es sind Situationen denkbar, bei denen die Auswertungseinrichtung bei Auswertung der Daten der Sensormittel zu dem Ergebnis kommt, dass ein Zustand gegeben ist, bei dem der Fahrer das Fahrzeug nicht mehr sicher zu führen vermag, obwohl dies objektiv nicht zutrifft. Für einen solchen Fall ist es gemäß einer weiteren Ausgestaltung der Erfindung in vorteilhafter Weise vorgesehen, dass - gemäß einem in der Figur nicht dargestellten Schritt S6 - dem Fahrer der Übergang zu einer autonomen Steuerung des Fahrzeugs und/oder die autonome Steuerung signalisiert wird und der Fahrer den Übergang zu einer autonomen Steuerung, die autonome Steuerung des Fahrzeugs und/oder die hierbei durchgeführten Maßnahmen zumindest teilweise beenden und/oder abändern kann.

Das Signalisieren des Übergangs zu bzw. Andauerns einer autonomen Steuerung kann hierbei auf jede geeignete Weise erfolgen, beispielsweise durch das Anzeigen/Aufleuchten von entsprechenden Warnhinweisen, durch ein akustisches Signal, durch eine Sprachansage, etc. Das zumindest teilweise Unterbinden, Beenden oder Abändern der autonomen Steuerung und/oder der bei der autonomen Steuerung des Fahrzeugs durchgeführten Maßnahmen kann dann ebenfalls auf jede geeignete Weise erfolgen, beispielsweise durch Betätigen eines Tasters, durch Auswählen von wenigstens einer Option auf einer Anzeigeinrichtung (Display) oder durch Sprechen eines Sprachbefehls.

Zur Durchführung des erfindungsgemäßen Verfahrens ist es erforderlich, dass das Fahrzeug über entsprechende geeignete Einrichtungen verfügt. So kann vorgesehen sein, dass das Fahrzeug mit einem Fahrerassistenzsystem ausgestattet ist, das eine Erfassungseinrichtung, mit der der Zustand eines Fahrers durch Erfassung von wenigstens einer physiologischen Zustandsgröße und/oder Verhaltensweise erfasst werden kann, und eine Auswertungseinrichtung aufweist, mit der die wenigstens eine erfasste physiologische Zustandsgröße und/oder Verhaltensweise ausgewertet werden kann. Weiter ist eine mit der Auswertungseinrichtung in kommunikativer Verbindung stehende Steuereinrichtung vorgesehen, mit Hilfe derer für den Fall, dass aufgrund der wenigstens einen erfassten und ausgewerteten physiologischen Zustandsgröße und/oder Verhaltensweise des Fahrers mit einem vorgebbaren Grad an Wahrscheinlichkeit davon auszugehen ist, dass der Fahrer das Fahrzeug nicht mehr sicher zu führen vermag, eine autonome Steuerung des Fahrzeugs durchgeführt werden kann.

Damit ein Fahrzeug in einer realen Verkehrsumgebung sicher autonom, d.h. ohne Einwirkung durch einen Fahrer gesteuert werden kann, sind entsprechende Sensor- und Steuermittel erforderlich, wie sie aus dem Stand der Technik bereits bekannt sind. Beispielsweise Sensormittel zur Erfassung einer Umgebung eines Fahrzeugs in Form von Kameramitteln, Ultraschall-, Radar-, Lidar-, Laser-, und/oder Photomischdetektor-Sensorik und entsprechende Auswertungseinrichtungen. Hiermit kann beispielsweise die nähere Umgebung des Fahrzeugs, insbesondere der dem Fahrzeug voraus liegende Straßenverlauf erfasst und ausgewertet werden. Hiermit können beispielsweise der weitere Straßenverlauf, Lichtsignale, Verkehrsschilder, andere Verkehrsteilnehmer, etc. erkannt werden. Durch eine entsprechende Auswertung der erfassten Informationen kann dann mit Hilfe einer automatisierten Antriebs- (Beschleunigungs-, Schalt- und Bremseinrichtung) sowie einer automatisierten Lenkeinrichtung das Fahrzeug autonom und ohne Gefährdung für den Fahrer, das eigene Fahrzeug und die anderen Verkehrsteilnehmer gesteuert werden.

Wenn, wie dies bei vielen modernen Fahrzeugen bereits jetzt der Fall ist, auch eine (satellitengestützte) Positionsbestimmungseinrichtung sowie ein (satellitengestütztes) Navigationssystem vorhanden ist, kann mittels der autonomen Steuerung nicht nur ein sicherer Halteplatz für das Fahrzeug angesteuert werden, sondern - wie oben beschrieben - das Fahrzeug auch autonom in Richtung einer ärztlichen/medizinischen Hilfseinrichtung (Klinik, Notarztwagen) bewegt werden.

Weitere Vorteile können erzielt werden, wenn das Fahrzeug bzw. das in ihm vorhandene Fahrerassistenzsystem weiter eine Sende- und Empfangseinrichtung umfasst oder eine Verbindungseinrichtung zu diesen Einrichtungen aufweist, so dass mittels der Sende- und Empfangseinrichtung über Funk Daten an eine Klinik oder eine andere Hilfseinrichtung (z.B. Rettungsleitstelle) übertragen und Daten von einer Klinik oder einer anderen Hilfseinrichtung empfangen werden können. Hierdurch kann - wie ebenfalls oben bereits beschrieben - gegebenenfalls erreicht werden, das das Fahrzeug im Vergleich zu der vom Fahrerassistenzsystem ausgewählten und angesteuerten Klinik/Hilfseinrichtung zu bzw. in Richtung einer für den gegebenen Fall besser geeigneten Klinik oder Hilfseinrichtung (z.B. Notarztwagen) gesteuert wird, wodurch gegebenenfalls wertvolle Zeit bis zur ersten medizinischen Behandlung (beispielsweise eine Wiederbelebungsmaßnahme) eingespart werden kann.

Durch die Erfassung und Überwachung von wenigstens einer physiologischen Zustandsgröße (beispielsweise: Puls mittels Elektroden im Sicherheitsgurt) und/oder Verhaltensweise (beispielsweise: Kopfhaltung mittels Kamera) kann erfindungsgemäß auf den Gesundheitszustand eines Fahrers geschlossen werden. Bei Feststellung einer akuten Gefahr, dass der Fahrer nicht mehr dazu in der Lage ist, das Fahrzeug sicher zu führen, kann mit Hilfe einer autonomen Steuerung des Fahrzeugs, d.h. bei einem Fahrzeug, bei dem autonomes (pilotiertes) Fahren möglich ist, beispielsweise auf einem Parkplatz/Seitenstreifen gehalten werden. In Verbindung mit beispielsweise einem E-Call-System kann ein Notruf ausgelöst werden. Weiter kann mit Hilfe des pilotierten Fahrens das Fahrzeug autonom in Richtung einer Klinik oder einer anderen Hilfseinrichtung gesteuert werden. So kann das Fahrzeug beispielsweise dem Notarzt entgegenfahren, um die Zeit bis zur einer Ersthilfe/Wiederbelebungsmaßnahme zu verkürzen. Um eine Fehlauslösung zu verhindern, kann dem Fahrer die Möglichkeit gegeben werden, zumindest einzelne Vorgänge abzubrechen, falls er hierzu noch in der Lage ist.

## Patentansprüche

1. Verfahren zum Betreiben eines Fahrzeugs, wobei während des Betriebs des Fahrzeugs (S1) eine Überwachung des Zustands eines Fahrers unter Erfassung (S2) und Auswertung (S3) von wenigstens einer physiologischen Zustandsgröße und/oder Verhaltensweise durchgeführt wird und in Abhängigkeit von dem Ergebnis einer Auswertung der wenigstens einen physiologischen Zustandsgröße und/oder Verhaltensweise eine geeignete Maßnahme zur Einhaltung eines sicheren Zustands des Fahrers und/oder des Fahrzeugs durchgeführt wird,
wobei für den Fall, dass aufgrund der wenigstens einen erfassten und ausgewerteten physiologischen Zustandsgröße und/oder Verhaltensweise des Fahrers mit einem vorgebbaren Grad an Wahrscheinlichkeit davon auszugehen ist, dass der Fahrer das Fahrzeug nicht mehr sicher zu führen vermag (S4), mittels hierfür vorgesehener Sensor- und Steuerungseinrichtungen eine autonome Steuerung des Fahrzeugs (S5) zu einer Klinik oder einer anderen Hilfseinrichtung durchgeführt wird, und
während der autonomen Steuerung des Fahrzeugs (S5) von einer Sendeeinrichtung des Fahrzeugs mittels Funk Daten an die Klinik oder die andere Hilfseinrichtung übertragen werden,
**dadurch gekennzeichnet dass**
von einer Empfangseinrichtung des Fahrzeugs mittels Funk Daten von der Klinik oder der anderen Hilfseinrichtung empfangen werden, die zumindest einen Steuerbefehl für eine Lenkrad- und/oder Sitzverstellung enthalten.

2. Verfahren nach Anspruch 1,
**dadurch gekennzeichnet, dass**
die von der Empfangseinrichtung des Fahrzeugs empfangenen Daten einen Steuerbefehl
a) zum Verstellen eines Fahrersitzes in eine Liegeposition und/oder
b) zum Verstellen des Lenkrads in Richtung des Armaturenbretts oder zum Versenken des Lenkrads in das Armaturenbrett,
umfassen.

3. Verfahren nach einem der vorhergehenden Ansprüche,
**dadurch gekennzeichnet, dass**
als physiologische Zustandsgröße und/oder Verhaltensweise des Fahrers zumindest eine von dessen Herzfrequenz, Herzfrequenzvariabilität, Hauttemperatur, Leitfähigkeit der Haut, Augenlidfrequenz, Blickrichtung, Blickrichtungswechsel, Kopfhaltung, und/oder Griffkraft des Fahrers am Lenkrad erfasst und ausgewertet werden.

4. Verfahren nach einem der vorhergehenden Ansprüche,
**dadurch gekennzeichnet, dass**
dem Fahrer der Übergang zu einer autonomen Steuerung des Fahrzeugs, und/oder eine autonome Steuerung (S5) signalisiert wird und der Fahrer den Übergang zu einer autonomen Steuerung, die autonome Steuerung und/oder die hierbei durchgeführten Maßnahmen zumindest teilweise beenden und/oder abändern kann.

## Claims

1. Method for operating a vehicle, wherein during operation of the vehicle (S1) the state of a driver is monitored by sensing (S2) and evaluating (S3) at least one physiological state variable and/or behaviour, and a suitable measure for maintaining a safe state of the driver and/or of the vehicle is implemented as a function of the result of an evaluation of the at least one physiological state variable and/or behaviour,
wherein in the event that there is a predefinable probability that the driver will no longer be capable (S4) of safely driving the vehicle owing to the at least one sensed and evaluated physiological state variable and/or behaviour of the driver, autonomous control of the vehicle (S5) to a hospital or another support facility is implemented by means of sensor devices and control devices which are provided for this purpose, and
during autonomous control of the vehicle (S5), data is transmitted by radio from a transmitter of the vehicle to the hospital or another support facility, **characterised in that**
data is received by radio by the hospital or another support facility from a receiver of the vehicle, which data contains at least one control command for a steering wheel and/or seat adjustment.

2. Method according to Claim 1,
**characterised in that**
the data received from the receiver of the vehicle comprises a control command
a) for adjusting a driver seat into a reclining position and/or
b) for adjusting the steering wheel in the direction of the dashboard or for lowering the steering wheel into the dashboard.

3. Method according to either of the preceding claims,
**characterised in that**
sensed and evaluated as the physiological state variable and/or behaviour of the driver is at least one of the following: his/her cardiac frequency, cardiac frequency variability, skin temperature, conductivity of the skin, eyelid frequency, viewing direction, change in viewing direction, head posture and/or gripping strength of the driver on the steering wheel.

4. Method according to any one of the preceding claims,
**characterised in that**
the transition to autonomous control of the vehicle and/or autonomous control (S5) is signalled to the driver, and the driver can at least partially end and/or modify the transition to autonomous control, autonomous control and/or the measures implemented here.

## Revendications

1. Procédé pour faire fonctionner un véhicule, selon lequel une surveillance de l'état d'un conducteur est effectuée pendant le fonctionnement du véhicule (S1) en détectant (S2) et évaluant (S3) au moins une grandeur d'état physiologique et/ou un comportement et selon lequel, en fonction du résultat d'une évaluation de l'au moins une grandeur d'état physiologique et/ou d'un comportement, une mesure appropriée est prise pour maintenir le conducteur et/ou le véhicule dans un état sécurisé,
selon lequel, pour le cas où, en raison de l'au moins une grandeur d'état physiologique et/ou comportement détectée et évaluée du conducteur avec un degré de probabilité pouvant être prescrit, il faut supposer que le conducteur n'est plus capable (S4) de conduire le véhicule en toute sécurité, une commande autonome du véhicule (S5) vers un hôpital ou un autre établissement de secours est effectuée au moyen de dispositifs de capteurs et de commande prévus à cet effet, et
selon lequel, pendant la commande autonome du véhicule (S5), des données sont transmises par radio, par un dispositif émetteur du véhicule, à l'hôpital ou à l'autre établissement de secours,
**caractérisé en ce que** des données en provenance de l'hôpital ou de l'autre établissement de secours sont reçues par radio par un dispositif récepteur du véhicule, lesquelles données contiennent au moins une instruction de commande pour un déplacement de volant et/ou de siège.

2. Procédé selon la revendication 1, **caractérisé en ce que** les données reçues par le dispositif récepteur du véhicule comprennent une instruction de commande
a) pour déplacer un siège de conducteur dans une position allongée et/ou
b) pour déplacer le volant en direction du tableau de bord ou pour baisser le volant dans le tableau de bord.

3. Procédé selon l'une des revendications précédentes, **caractérisé en ce que** l'on détecte et évalue comme grandeur d'état physiologique et/ou comportement du conducteur au moins l'une des grandeurs suivantes : fréquence cardiaque, variabilité de la fréquence cardiaque, température de la peau, conductivité de la peau, fréquence de clignement de paupières, direction du regard, changement de la direction du regard, maintien de la tête et/ou force de la prise de volant du conducteur.

4. Procédé selon l'une des revendications précédentes, **caractérisé en ce que** le passage à une commande autonome du véhicule ou une commande autonome (S5) sont signalés au conducteur et le conducteur peut au moins en partie arrêter et/ou modifier le passage à une commande autonome, la commande autonome et/ou les mesures prises dans ce cadre.
